# EUROPÄISCHE PATENTSCHRIFT

(11) **EP 4 513 011 B1**
(45) Veröffentlichungstag und Bekanntmachung des Hinweises auf die Patenterteilung: **14.01.2026**
(21) Anmeldenummer: 24194234.1
(22) Anmeldetag: 13.08.2024
(51) Int. Cl.: F01N 13/18, F16L 21/00

(54) **VERBINDUNGSFLANSCH ZUR VERBINDUNG ZWEIER ROHRARTIGER KOMPONENTEN MITEINANDER**
CONNECTING FLANGE FOR CONNECTING TWO TUBULAR COMPONENTS TO EACH OTHER
BRIDE DE RACCORDEMENT POUR RACCORDER DEUX ÉLÉMENTS TUBULAIRES L'UN À L'AUTRE

(30) Priorität: 22.08.2023 DE 102023122362
(43) Veröffentlichungstag der Anmeldung: 26.02.2025
(73) Patentinhaber: Purem GmbH, 66539 Neunkirchen (DE)
(72) Erfinder: Buchhammer, Andrei, Ludwigsburg (DE); Hermann, Lorenz, Schorndorf (DE); Boriga, Remus, Wernau (DE)
(74) Vertreter: Ruttensperger Lachnit Trossin Gomoll

(56) Entgegenhaltungen:
- FR-A1- 2 867 511
- US-A1- 2021 148 275
- US-B2- 9 683 687

## Beschreibung

Die vorliegende Erfindung betrifft einen Verbindungsflansch, durch welchen beispielsweise in einer Abgasanlage einer Brennkraftmaschine zwei rohrartige Komponenten fest und gasdicht miteinander verbunden werden können.

Zur festen und gasdichten Verbindung rohrartiger Komponenten in Abgasanlagen für beispielsweise in Kraftfahrzeugen eingesetzte Brennkraftmaschinen ist es bekannt, an einander zugewandt zu positionierenden und miteinander fest zu verbindenden axialen Endbereichen derartiger rohrartiger Komponenten im Wesentlichen radial sich erstreckende, ringartige Verbindungsflansche mit in axialer Richtung aufeinander zu orientierten Verbindungsflächen vorzusehen. Die Verbindungsflansche der beiden rohrartigen Komponenten können beispielsweise mit einem zwischen den Verbindungsflächen derselben angeordneten ringartigen Dichtelement im Bereich ihrer Verbindungsflansche durch diese durchsetzende Schraubbolzen oder durch eine diese außen umgebende Verbindungsschelle miteinander fest verbunden werden.

Eine Verbindungsflansch gemäß dem Oberbegriff des Anspruchs 1 ist aus der FR 2 867 511 A1 bekannt. Bei diesem Verbindungsflansch ist ein ringartiges und in Anpassung an die konische Formgebung einer ersten Verbindungsfläche des Verbindungsflansches konisch geformtes Dichtelement derart positioniert, dass es den Verbindungsflansch bzw. dessen erste Verbindungsfläche radial vollständig überdeckt. Ein mit dem Verbindungsflansch zu verbindender und in Anpassung an die konische Formgebung der ersten Verbindungsfläche bzw. des Dichtelements ebenfalls konisch geformter Gegen-Verbindungsbereich einer rohrartigen Komponente ist über das Dichtelement an der ersten Verbindungselement abgestützt.

Es ist die Aufgabe der vorliegenden Erfindung, einen Verbindungsflansch zur Verbindung zweier rohrartiger Komponenten insbesondere einer Abgasanlage einer Brennkraftmaschine vorzusehen, welcher eine zuverlässige und gasdichte Verbindung der rohrartigen Komponenten gewährleistet.

Erfindungsgemäß wird die Aufgabe gelöst durch einen Verbindungsflansch zur Verbindung zweier rohrartiger Komponenten miteinander, vorzugsweise in einer Abgasanlage einer Brennkraftmaschine, gemäß Anspruch 1, umfassend einen eine Flanschlängsachse ringartig umgebenden Flanschkörper mit einem ersten Flansch-Anlagebereich und einem in Richtung der Flanschlängsachse in Abstand zu dem ersten Flansch-Anlagebereich angeordneten zweiten Flansch-Anlagebereich, wobei am ersten Flansch-Anlagebereich eine erste Innenumfangsanlagefläche zur Anlage des Flanschkörpers an einer Außenumfangsfläche einer der vermittels des Verbindungsflansches miteinander zu verbindenden Komponenten vorgesehen ist und am zweiten Flansch-Anlagebereich eine zweite Innenumfangsanlagefläche zur Anlage des Flanschkörpers an der Außenumfangsfläche vorgesehen ist, wobei im Flanschkörper axial zwischen der ersten Innenumfangsanlagefläche und der zweiten Innenumfangsanlagefläche eine bezüglich der ersten Innenumfangsanlagefläche oder/und der zweiten Innenumfangsanlagefläche nach radial außen sich erstreckende, nach radial innen offene Isolieraussparung vorgesehen ist.

Durch das Bereitstellen der beiden axial zueinander in Abstand angeordneten Flansch-Anlagebereiche wird einerseits eine stabile Anlagewechselwirkung des Verbindungsflansches mit einer der durch diesen zu verbindenden rohrartigen Komponenten und damit eine definierte Positionierung des Verbindungsflansches bezüglich dieser rohrartigen Komponente erreicht. Gleichzeitig besteht die Möglichkeit, im Bereich von zumindest einem der Flansch-Anlagebereiche eine feste Anbindung des Verbindungsflansches an diese rohrartige Komponente zu realisieren. Andererseits erzeugt die Isolieraussparung bzw. die darin enthaltene Luft oder ein anderes thermisch isolierendes Material eine Isolierwirkung, durch welche der Verbindungsflansch thermisch entlastet wird. Dies führt zu einer besonders guten Eignung des erfindungsgemäß aufgebauten Verbindungsflansches zum Einsatz in einem thermisch stark belasteten Bereich beispielsweise einer Abgasanlage einer Brennkraftmaschine nahe dem Abgasauslass der Brennkraftmaschine.

Die Anlagewechselwirkung des Verbindungsflansches mit der von diesem umgebenen rohrartigen Komponente kann dadurch weiter verbessert werden, dass der erste Flansch-Anlagebereich an einem ersten axialen Endbereich des Flanschkörpers vorgesehen ist und der zweite Flansch-Anlagebereich an einem zweiten axialen Endbereich des Flanschkörpers vorgesehen ist, oder/und dass die erste Innenumfangsanlagefläche und die zweite Innenumfangsanlagefläche Zylinderflächen, vorzugsweise Kreiszylinderflächen mit zueinander gleichem Radius, sind. Insbesondere ist mit derartiger Ausgestaltung der erfindungsgemäß aufgebaute Verbindungsflansch besonders geeignet zur Verwendung in Verbindung mit zylindrischen, rohrartigen Komponenten mit kreisrundem Querschnitt.

Für die Verbindung der beiden miteinander zu verbindenden rohrartigen Komponenten weist der Flanschkörper axial im Wesentlichen zwischen dem ersten Flansch-Anlagebereich und dem zweiten Flansch-Anlagebereich einen bezüglich des ersten Flansch-Anlagebereichs und des zweiten Flansch-Anlagebereichs nach radial außen vorspringenden Flansch-Verbindungsbereich mit einem axial zwischen dem ersten Flansch-Anlagebereich und dem zweiten Flansch-Anlagebereich liegenden Verbindungsbereichsscheitel auf, wobei im Verbindungsbereichsscheitel der Flanschkörper den größten Radialabstand zur Flanschlängsachse hat.

Um scharfkantige Bereiche zu vermeiden, kann der Flanschkörper im Verbindungsbereichsscheitel bezüglich der Flanschlängsachse konvex gewölbt sein.

Der Flanschkörper weist eine von dem Verbindungsbereichsscheitel zu dem ersten Flansch-Anlagebereich sich erstreckende erste Verbindungsfläche mit, ausgehend vom Verbindungsbereichsscheitel, abnehmendem Radialabstand zur Flanschlängsachse und eine von dem Verbindungsbereichsscheitel zu dem zweiten Flansch-Anlagebereich sich erstreckende zweite Verbindungsfläche mit, ausgehend vom Verbindungsbereichsscheitel, abnehmendem Radialabstand zur Flanschlängsachse auf. Diese Verbindungsflächen können zum Bereitstellen einer Verbindungswechselwirkung mit der anderen der beiden rohrartigen Komponenten bzw. einem die beiden rohrartigen Komponenten zusammenhaltenden Verbindungsorgan genutzt werden.

Zum Erhalt einer einfach zu realisierenden, definierten Verbindungswechselwirkung im Bereich des Verbindungsbereichs wird vorgeschlagen, dass die erste Verbindungsfläche, ausgehend vom Verbindungbereichsscheitel, sich im Wesentlichen konisch verjüngt, oder/und dass die zweite Verbindungsfläche, ausgehend vom Verbindungsbereichsscheitel, sich im Wesentlichen konisch verjüngt.

Die gasdichte Verbindung der beiden rohrartigen Komponenten wird dadurch unterstützt, dass an dem Flanschkörper axial im Wesentlichen zwischen dem Verbindungsbereichsscheitel und dem ersten Flansch-Anlagebereich ein über die erste Verbindungsfläche hervorstehendes Dichtelement vorgesehen ist.

In dem Flanschkörper ist eine zur ersten Verbindungsfläche offene Dichtelement-Aufnahmeaussparung vorgesehen, so dass eine definierte Positionierung des Dichtelements am Flanschkörper gewährleistet werden kann.

Ferner kann für eine über den Umfang gleichmäßige Dichtwirkung das Dichtelement die Flanschlängsachse im Wesentlichen ringartig umgeben. Wenn das Dichtelement mit Graphitmaterial aufgebaut ist, ist es für einen Einsatz in thermisch und chemisch stark belasteten Bereichen besonders geeignet.

Um das erforderliche Volumen für die Aufnahme des Dichtelements am Flanschkörper bei gleichwohl realisierter Isolierwirkung bereitstellen zu können, wird vorgeschlagen, dass die Isolieraussparung in einem von dem Dichtelement axial überlappten Bereich derselben eine geringere Erstreckungslänge nach radial außen aufweist, als in einem von dem Dichtelement axial nicht überlappten Bereich derselben.

Die Erfindung betrifft ferner eine Verbindungsbaugruppe, vorzugsweise für eine Abgasanlage einer Brennkraftmaschine, umfassend eine erste rohrartige Komponente und wenigstens einen mit seiner ersten Innenumfangsanlagefläche und seiner zweiten Innenumfangsanlagefläche an einer Außenumfangsfläche der ersten rohrartigen Komponente anliegenden, erfindungsgemäß aufgebauten Verbindungsflansch.

Ein stabiler Zusammenhalt des wenigstens einen Verbindungsflansches mit der ersten rohrartigen Komponente kann dadurch erreicht werden, dass der wenigstens eine Verbindungsflansch im Bereich wenigstens eines Flansch-Anlagebereichs von erstem Flansch-Anlagebereich und zweitem Flansch-Anlagebereich mit der ersten rohrartigen Komponente durch Materialschluss, vorzugsweise Verschweißen, fest verbunden ist.

Zum Vermeiden mechanischer Spannungen bei unterschiedlich starker thermischer Ausdehnung des wenigstens einen Verbindungsflansches einerseits und der ersten rohrartigen Komponente andererseits wird vorgeschlagen, dass der wenigstens eine Verbindungsflansch nur im Bereich von einem Flansch-Anlagebereich von erstem Flansch-Anlagebereich und zweitem Flansch-Anlagebereich mit der ersten rohrartigen Komponente fest verbunden ist. Im anderen Flansch-Anlagebereich ist der Flanschkörper an der Außenumfangsfläche der ersten rohrartigen Komponente zwar abgestützt, bezüglich dieser jedoch axial im Wesentlichen frei bewegbar.

Bei einer besonders vorteilhaften Ausgestaltung kann vorgesehen sein, dass der wenigstens eine Verbindungsflansch im Bereich des zweiten Flansch-Anlagebereichs mit der ersten rohrartigen Komponente fest verbunden ist. Der dem Dichtelement näher positionierte erste Flansch-Anlagebereich und daher auch derjenige Bereich, in welchem das zur Wechselwirkung mit einer weiteren rohrartigen Komponente vorgesehene Dichtelement positioniert ist, sind daher bezüglich der ersten rohrartigen Komponente axial bewegbar.

Ferner betrifft die vorliegende Erfindung eine Abgasanlage für eine Brennkraftmaschine, umfassend eine erfindungsgemäß aufgebaute Verbindungsbaugruppe und wenigstens eine vermittels des wenigstens einen Verbindungsflansches mit der ersten rohrartigen Komponente verbundene zweite rohrartige Komponente.

Für die Verbindung mit dem wenigstens einen Verbindungsflansch kann die zweite rohrartige Komponente einen Gegen-Verbindungsbereich mit einer Gegen-Verbindungsfläche zur Verbindungswechselwirkung mit der ersten Verbindungsfläche aufweisen.

Zum Unterstützen einer definierten Positionierung der beiden miteinander zu verbindenden rohrartigen Komponenten wird vorgeschlagen, dass die Gegen-Verbindungsfläche sich in Richtung zu einem axialen Ende der zweiten rohrartigen Komponente, vorzugsweise konisch, radial erweiternd ausgebildet ist. Somit kann erreicht werden, dass die beiden rohrartigen Komponenten durch aneinander abgestützte konische Verbindungsflächen in einer radial zueinander zentrierten Positionierung gehalten sind.

Der feste Zusammenhalt der beiden rohrartigen Komponenten kann beispielsweise dadurch erreicht werden, dass die erste rohrartige Komponente und die zweite rohrartige Komponente in einem Verbindungszustand durch ein den Verbindungsbereich des wenigstens einen Verbindungsflansches und den Gegen-Verbindungsbereich der zweiten rohrartigen Komponente ringartig umgebendes Verbindungsorgan, vorzugsweise Verbindungschelle, aneinander gehalten sind.

Die erste rohrartige Komponente und die zweite rohrartige Komponente können in dem Verbindungszustand durch das Verbindungsorgan derart aneinander gehalten sein, dass die Gegen-Verbindungsfläche des Gegen-Verbindungsbereichs der zweiten rohrartigen Komponente an der ersten Verbindungsfläche anliegt.

Die vorliegende Erfindung wird nachfolgend mit Bezug auf die beiliegenden Figuren detailliert beschrieben. Es zeigt:
- Fig. 1: eine Längsschnittansicht einer Verbindungbaugruppe mit einer rohrartigen Komponente und einem daran vorgesehenen Verbindungsflansch;
- Fig. 2: eine Detailansicht der Verbindungsbaugruppe der Fig. 1 im Bereich II in Fig. 1 bei mit einer weiteren rohrartigen Komponente verbundener Verbindungbaugruppe.

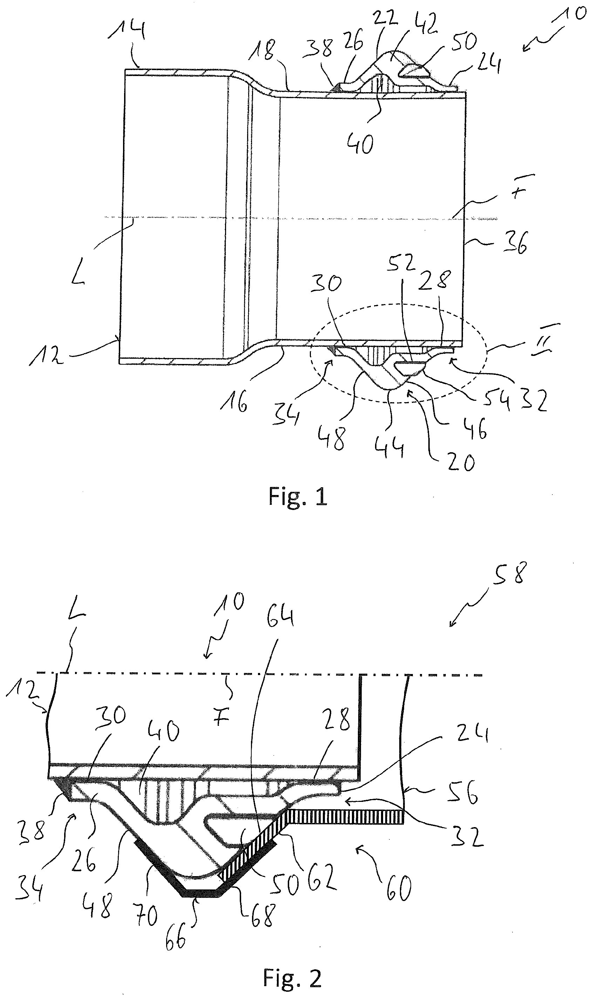

In Fig. 1 ist eine in einer Abgasanlage einer Brennkraftmaschine einsetzbare Verbindungsbaugruppe allgemein mit 10 bezeichnet. Die Verbindungsbaugruppe 10 umfasst eine erste rohrartige Komponente 12, die im dargestellten Ausgestaltungsbeispiel zwei im Wesentlichen zylindrische Bereiche 14, 16 mit zueinander unterschiedlichen Durchmessern bezüglich einer Längsachse L aufweist. In dem Bereich 16 mit kleinerem Durchmesser ist an einer Außenumfangsfläche 18 der ersten rohrartigen Komponente 12 ein allgemein mit 20 bezeichneter Verbindungsflansch vorgesehen. Der Verbindungsflansch 20 ist die im Zusammenbauzustand einer Flanschlängsachse F entsprechende Längsachse L der ersten rohrartigen Komponente 12 ringartig umgebend angeordnet, bildet also einen die Außenumfangsfläche 18 in ihrem gesamten Umfangserstreckungsbereich um die Längsachse L umgebenden, geschlossenen Ring.

Der Verbindungsflansch 20 umfasst einen mit Metallmaterial aufgebauten Flanschkörper 22. Am Flanschkörper 22 sind in axialem Abstand zueinander ein erster Flansch-Anlagebereich 24 und ein zweiter Flansch-Anlagebereich 26 ausgebildet. Im ersten Flansch-Anlagebereich 24 stellt der Flanschkörper 22 eine erste Innenumfangsanlagefläche 28 bereit, mit welcher der Flanschkörper 22 an der Außenumfangsfläche 18 der ersten rohrartigen Komponente 12 anliegt. Im zweiten Flansch-Anlagebereich 26 stellt der Flanschkörper 22 eine zweite Innenumfangsanlagefläche 30 bereit, mit welcher der Flanschkörper 22 ebenfalls an der Außenumfangsfläche 18 der ersten rohrartigen Komponente 12 anliegt.

Zur Anpassung an die Formgebung der ersten rohrartigen Komponente 12 insbesondere in dem zur Aufnahme des Verbindungsflansches 20 vorgesehenen Bereich 16 derselben sind die erste Innenumfangsanlagefläche 28 und die zweite Innenumfangsanlagefläche 30 als Zylinderflächen ausgebildet, die, angepasst an die beispielsweise kreisrunde Querschnittsgeometrie der ersten rohrartigen Komponente 12 insbesondere im Bereich 16 derselben, ebenfalls eine kreisförmige Querschnittsgeometrie aufweisen können, also als Kreiszylinderflächen ausgebildet sein können. Dadurch ist gewährleistet, dass in beiden Flansch-Anlagebereichen 24, 26 ein stabiler, flächiger Anlagekontakt zwischen dem Flanschkörper 22 und der ersten rohrartigen Komponente 12 an einem den ersten Flansch-Anlagebereich 24 aufweisenden ersten axialen Endbereich 32 des Flanschkörpers 22 und einem den zweiten Flansch-Anlagebereich 26 aufweisenden zweiten axialen Endbereich 34 des Flanschkörpers 22 erzeugt wird.

Eine feste Verbindung des Flanschkörpers 22 mit der ersten rohrartigen Komponente 12 erfolgt nur im Bereich des von einem axialen Ende 36 der ersten rohrartigen Komponente 12 weiter entfernt liegenden zweiten Flansch-Anlagebereichs 26 bzw. zweiten axialen Endbereichs 34. Hierzu kann eine in Umfangsrichtung um die Längsachse L vorzugsweise unterbrechungsfrei durchlaufende Verschweißung 38 erzeugt werden. Im Bereich des ersten Flansch-Anlagebereichs 24 bzw. des ersten axialen Endbereichs 32 ist daher der auch dort sich an der Außenumfangsfläche 18 der ersten rohrartigen Komponente 12 abstützende Flanschkörper 22 grundsätzlich bezüglich der ersten rohrartigen Komponente 12 axial im Wesentlichen frei bewegbar bzw. verschiebbar.

Axial zwischen den beiden Flansch-Anlagebereichen 24, 26 bzw. den beiden axialen Endbereichen 32, 34 des Flanschkörpers 22 ist eine Isolieraussparung 40 im Flanschkörper 22 ausgebildet. Die Isolieraussparung 40 erstreckt sich, ausgehend von dem radialen Niveau der beiden den gleichen Radialabstand zur Flanschlängsachse F aufweisenden Innenumfangsanlageflächen 28, 30, nach radial außen und ist grundsätzlich nach radial innen offen bzw. ist bei an der ersten rohrartigen Komponente 12 angebrachtem Verbindungsflansch 20 durch den zwischen den beiden axialen Endbereichen 32, 34 des Flanschkörpers 22 liegenden Abschnitt der Außenumfangsfläche 18 der ersten rohrartigen Komponente 12 radial innen überdeckt.

In der Isolieraussparung 40 ist im Zusammenbauzustand Luft oder ggf. ein anderes isolierendes Material, wie z. B. geschäumtes Isoliermaterial oder dergleichen, vorhanden, wodurch eine thermische Isolierung des Flanschkörpers 22 insbesondere im Bereich eines zwischen den beiden Flansch-Anlagebereichen 24, 26 liegenden Flansch-Verbindungsbereichs 42 realisiert ist. Mit diesem Flansch-Verbindungsbereich 42 erstreckt der Flanschkörper 22 sich zwischen den beiden Flansch-Anlagebereichen 24, 26 weiter nach radial außen. In einem Verbindungsbereichsscheitel 44 weist der Flansch-Verbindungsbereich 42 bzw. der Flanschkörper 22 den größten Radialabstand zur Flanschlängsachse F auf.

Im Anschluss an den ersten Flansch-Anlagebereich 24 stellt der Flansch-Verbindungsbereich 42 eine, ausgehend vom Verbindungsbereichsscheitel 44 in Richtung auf den ersten Flansch-Anlagebereich 24 zu sich vorzugsweise im Wesentlichen konisch verjüngende erste Verbindungsfläche 46 bereit. Gleichermaßen stellt der Flansch-Verbindungsbereich 42 zwischen dem Verbindungsbereichsscheitel 44 und dem zweiten Flansch-Anlagebereich 26 eine sich, ausgehend vom Verbindungsbereichsscheitel 44 in Richtung zu dem zweiten Flansch-Anlagebereich 26 vorzugsweise im Wesentlichen konisch verjüngende zweite Verbindungsfläche 48 bereit. Um einen scharfkantigen Übergang der beiden im Wesentlichen V-förmig aufeinander zu laufenden Verbindungsflächen 46, 48 zu vermeiden, ist der Flansch-Verbindungsbereich 42 im Bereich des Verbindungsbereichsscheitels 44 bezüglich der Flanschlängsachse F konvex gewölbt.

In einem zwischen dem Verbindungsbereichsscheitel 44 und dem ersten Flansch-Anlagebereich 24 liegenden Bereich des Flanschkörpers 22 bzw. des Flansch-Verbindungsbereichs 42 ist ein beispielsweise mit Graphitmaterial aufgebautes, die Flanschlängsachse L vorzugsweise als geschlossener Ring umgebendes Dichtelement 50 angeordnet. Dieses ist in einer zur ersten Verbindungsfläche 46 offenen Dichtelement-Aufnahmeaussparung 52 aufgenommen und darin beispielsweise durch Presspassung gehalten. Das Dichtelement 50 steht mit einem Dichtflächenbereich 54 desselben über die erste Verbindungsfläche 46 hervor, um eine Dichtwechselwirkung mit einer in Fig. 2 erkennbaren zweiten rohrartigen Komponente 56 entfalten zu können.

Um im Flanschkörper 22 das zur Aufnahme des Dichtelements 50 erforderliche Volumen bereitstellen zu können, ohne den Flanschkörper 22 übermäßig groß dimensionieren zu müssen, ist die Isolieraussparung 40 in demjenigen Bereich, in welchem diese von dem Dichtelement 50 bzw. der Dichtelement-Aufnahmeaussparung 52 axial überlappt ist, mit geringerer radialer Erstreckungslänge ausgebildet, als in dem axial folgenden Bereich, in welchem die Isolieraussparung 40 von dem Dichtelement 50 bzw. der Dichtelement-Aufnahmeaussparung 52 nicht axial überlappt ist. In diesem Bereich kann ein radialer Überlapp zwischen der Isolieraussparung 40 und dem Dichtelement 50 bzw. der Dichtelement-Aufnahmeaussparung 52 vorhanden sein.

Die Fig. 2 veranschaulicht, wie die beiden rohrartigen Komponenten 12 und 56 einer allgemein mit 58 bezeichneten Abgasanlage unter Einsatz des Verbindungsflansches 20 miteinander gasdicht verbunden sind. Die zweite rohrartige Komponente 56 weist in ihrem mit der ersten rohrartigen Komponente 12 gasdicht zu verbindenden axialen Endbereich 60 einen beispielsweise durch radiales Aufweiten erzeugten Gegen-Verbindungsbereich 62 mit einer Gegen-Verbindungsfläche 64 auf. In Anpassung an die Formgebung der ersten Verbindungsfläche 46 des Verbindungsflansches 20 kann auch die Gegen-Verbindungsfläche 64 eine grundsätzlich konische Form aufweisen.

Im Verbindungszustand liegt die zweite rohrartige Komponente 56 mit der Gegen-Verbindungsfläche 64 unter Kompression des Dichtelements 50 am Verbindungsflansch 20 bzw. der ersten Verbindungsfläche 46 an. Der feste Zusammenhalt der beiden rohrartigen Komponenten 12, 56 wird in diesem Zustand durch ein den Verbindungsflansch 20 bzw. auch den Gegen-Verbindungsbereich 62 radial außen ringartig umgebendes Verbindungsorgan 66 erreicht. Dieses ist beispielsweise als Verbindungsschelle bzw. Rohrschelle aufgebaut, welche mit jeweiligen Schenkelbereichen 68, 70 am Gegen-Verbindungsbereich 62 bzw. an der zweiten Verbindungsfläche 48 des Verbindungsflansches 20 anliegt und durch Umfangsverspannung derselben den Gegen-Verbindungsbereich 62 axial gegen den Verbindungsbereich 42 des Verbindungsflansches 20 spannt.

Da einerseits der Verbindungsflansch 20 insbesondere in seinem Flansch-Verbindungsbereich 42 durch das Bereitstellen der Isolieraussparung 40 gut thermisch isoliert ist gegenüber dem in diesem Bereich sich erstreckenden Abschnitt der ersten rohrartigen Komponente 12 und da andererseits der erste Flansch-Anlagebereich 24 und der diesem nahe liegende Abschnitt des Flansch-Verbindungsbereichs 42, in welchem auch die erste Verbindungsfläche 46 bereitgestellt ist, grundsätzlich bezüglich der ersten rohrartigen Komponente 12 axial im Wesentlichen frei bewegbar ist, kann eine über die zweite rohrartige Komponente 56 erfolgende vergleichsweise starke Erwärmung des Verbindungsflansches 20 nicht zu einer übermäßigen Belastung des Verbindungsflansches 20 bzw. der festen Verbindung desselben mit der ersten rohrartigen Komponente 12 führen. Tritt im Betrieb eine unterschiedlich starke thermische Längenänderung zwischen dem Verbindungsflansch 20 und der ersten rohrartigen Komponente 12 auf, kann der Verbindungsflansch 20 mit seinem ersten Flansch-Anlagebereich 24 sich axial bezüglich der ersten rohrartigen Komponente 12 verlagern. Aufgrund dieser Eigenschaft ist der erfindungsgemäß aufgebaute Verbindungsflansch 20 besonders geeignet zum Einsatz in einem derartigen Bereich der Abgasanlage 58, in welchem vermittels der vergleichsweise nahe an einer Brennkraftmaschine positionierten zweiten rohrartigen Komponente 56 eine starke thermische Belastung durch das von der Brennkraftmaschine ausgestoßene Abgas entsteht. Gleichwohl kann der Verbindungsflansch 20 auch in anderen bzw. weniger stark thermisch belasteten Bereichen einer Abgasanlage Anwendung finden.

## Patentansprüche

1. Verbindungsflansch zur Verbindung zweier rohrartiger Komponenten (12, 56) miteinander, vorzugsweise in einer Abgasanlage (58) einer Brennkraftmaschine, umfassend einen eine Flanschlängsachse (F) ringartig umgebenden Flanschkörper (22) mit einem ersten Flansch-Anlagebereich (24) und einem in Richtung der Flanschlängsachse (F) in Abstand zu dem ersten Flansch-Anlagebereich (24) angeordneten zweiten Flansch-Anlagebereich (26), wobei am ersten Flansch-Anlagebereich (24) eine erste Innenumfangsanlagefläche (28) zur Anlage des Flanschkörpers (22) an einer Außenumfangsfläche (18) einer der vermittels des Verbindungsflansches (20) miteinander zu verbindenden Komponenten (12, 56) vorgesehen ist und am zweiten Flansch-Anlagebereich (26) eine zweite Innenumfangsanlagefläche (30) zur Anlage des Flanschkörpers (22) an der Außenumfangsfläche (18) vorgesehen ist, wobei im Flanschkörper (22) axial zwischen der ersten Innenumfangsanlagefläche (28) und der zweiten Innenumfangsanlagefläche (30) eine bezüglich der ersten Innenumfangsanlagefläche (28) oder/und der zweiten Innenumfangsanlagefläche (30) nach radial außen sich erstreckende, nach radial innen offene Isolieraussparung (40) vorgesehen ist, wobei der Flanschkörper (22) axial im Wesentlichen zwischen dem ersten Flansch-Anlagebereich (24) und dem zweiten Flansch-Anlagebereich (26) einen bezüglich des ersten Flansch-Anlagebereichs (24) und des zweiten Flansch-Anlagebereichs (26) nach radial außen vorspringenden Flansch-Verbindungsbereich (42) mit einem axial zwischen dem ersten Flansch-Anlagebereich (24) und dem zweiten Flansch-Anlagebereich (26) liegenden Verbindungsbereichsscheitel (44) aufweist, wobei im Verbindungsbereichsscheitel (44) der Flanschkörper (22) den größten Radialabstand zur Flanschlängsachse (F) hat, wobei der Flanschkörper (22) eine von dem Verbindungsbereichsscheitel (44) zu dem ersten Flansch-Anlagebereich (24) sich erstreckende erste Verbindungsfläche (46) mit, ausgehend vom Verbindungsbereichsscheitel (44), abnehmendem Radialabstand zur Flanschlängsachse (F) aufweist und eine von dem Verbindungsbereichsscheitel (44) zu dem zweiten Flansch-Anlagebereich (26) sich erstreckende zweite Verbindungsfläche (48) mit, ausgehend vom Verbindungsbereichsscheitel (44), abnehmendem Radialabstand zur Flanschlängsachse (F) aufweist, wobei an dem Flanschkörper (22) axial im Wesentlichen zwischen dem Verbindungsbereichsscheitel (44) und dem ersten Flansch-Anlagebereich (24) ein über die erste Verbindungsfläche (46) hervorstehendes Dichtelement (50) vorgesehen ist,
**dadurch gekennzeichnet, dass** in dem Flanschkörper (22) eine zur ersten Verbindungsfläche (46) offene Dichtelement-Aufnahmeaussparung (52) vorgesehen ist.

2. Verbindungsflansch nach Anspruch 1, **dadurch gekennzeichnet, dass** der erste Flansch-Anlagebereich (24) an einem ersten axialen Endbereich (32) des Flanschkörpers (22) vorgesehen ist und der zweite Flansch-Anlagebereich (26) an einem zweiten axialen Endbereich (34) des Flanschkörpers (22) vorgesehen ist, oder/und dass die erste Innenumfangsanlagefläche (28) und die zweite Innenumfangsanlagefläche (30) Zylinderflächen, vorzugsweise Kreiszylinderflächen mit zueinander gleichem Radius, sind.

3. Verbindungsflansch nach Anspruch 1 oder 2, **dadurch gekennzeichnet, dass** der Flanschkörper (22) im Verbindungsbereichsscheitel (44) bezüglich der Flanschlängsachse (F) konvex gewölbt ist.

4. Verbindungsflansch nach einem der Ansprüche 1-3, **dadurch gekennzeichnet, dass** die erste Verbindungsfläche (46), ausgehend vom Verbindungbereichsscheitel (44), sich im Wesentlichen konisch verjüngt, oder/und dass die zweite Verbindungsfläche (48), ausgehend vom Verbindungsbereichsscheitel (44), sich im Wesentlichen konisch verjüngt.

5. Verbindungsflansch nach einem der Ansprüche 1-4, **dadurch gekennzeichnet, dass** das Dichtelement (50) die Flanschlängsachse (F) im Wesentlichen ringartig umgibt, oder/und dass das Dichtelement (50) mit Graphitmaterial aufgebaut ist.

6. Verbindungsflansch nach einem der Ansprüche 1-5, **dadurch gekennzeichnet, dass** die Isolieraussparung (40) in einem von dem Dichtelement (50) axial überlappten Bereich derselben eine geringere Erstreckungslänge nach radial außen aufweist, als in einem von dem Dichtelement (50) axial nicht überlappten Bereich derselben.

7. Verbindungsbaugruppe, vorzugsweise für eine Abgasanlage (50) einer Brennkraftmaschine, umfassend eine erste rohrartige Komponente (12) und wenigstens einen mit seiner ersten Innenumfangsanlagefläche (28) und seiner zweiten Innenumfangsanlagefläche (30) an einer Außenumfangsfläche (18) der ersten rohrartigen Komponente (12) anliegenden Verbindungsflansch (20) nach einem der Ansprüche 1-6.

8. Verbindungbaugruppe nach Anspruch 7, **dadurch gekennzeichnet, dass** der wenigstens eine Verbindungsflansch (20) im Bereich wenigstens eines Flansch-Anlagebereichs von erstem Flansch-Anlagebereich (24) und zweitem Flansch-Anlagebereich (26) mit der ersten rohrartigen Komponente (12) durch Materialschluss, vorzugsweise Verschweißen, fest verbunden ist.

9. Verbindungsbaugruppe nach Anspruch 7 oder 8, **dadurch gekennzeichnet, dass** der wenigstens eine Verbindungsflansch (20) nur im Bereich von einem Flansch-Anlagebereich von erstem Flansch-Anlagebereich (24) und zweitem Flansch-Anlagebereich (26) mit der ersten rohrartigen Komponente (12) fest verbunden ist.

10. Verbindungsbaugruppe nach Anspruch 9, **dadurch gekennzeichnet, dass** der wenigstens eine Verbindungsflansch (20) im Bereich des zweiten Flansch-Anlagebereichs (26) mit der ersten rohrartigen Komponente (12) fest verbunden ist.

11. Abgasanlage für eine Brennkraftmaschine, umfassend eine Verbindungsbaugruppe (10) nach einem der Ansprüche 7-10 und wenigstens eine vermittels des wenigstens einen Verbindungsflansches (20) mit der ersten rohrartigen Komponente (12) verbundene zweite rohrartige Komponente (56).

12. Abgasanlage nach Anspruch 11, **dadurch gekennzeichnet, dass** die zweite rohrartige Komponente (56) einen Gegen-Verbindungsbereich (62) mit einer Gegen-Verbindungsfläche (64) zur Verbindungswechselwirkung mit der ersten Verbindungsfläche (46) des wenigstens einen Verbindungflansches (20) aufweist.

13. Abgasanlage nach Anspruch 12, **dadurch gekennzeichnet, dass** die Gegen-Verbindungsfläche (64) sich in Richtung zu einem axialen Ende der zweiten rohrartigen Komponente (56), vorzugsweise konisch, radial erweiternd ausgebildet ist.

14. Abgasanlage nach Anspruch 12 oder 13, **dadurch gekennzeichnet, dass** die erste rohrartige Komponente (12) und die zweite rohrartige Komponente (56) in einem Verbindungszustand durch ein den Verbindungsbereich (42) des wenigstens einen Verbindungsflansches (20) und den Gegen-Verbindungsbereich (62) der zweiten rohrartigen Komponente (56) ringartig umgebendes Verbindungsorgan (66), vorzugsweise Verbindungschelle, aneinander gehalten sind.

15. Abgasanlage nach Anspruch 14, **dadurch gekennzeichnet, dass** die erste rohrartige Komponente (12) und die zweite rohrartige Komponente (56) in dem Verbindungszustand durch das Verbindungsorgan (66) derart aneinander gehalten sind, dass die Gegen-Verbindungsfläche (64) des Gegen-Verbindungsbereichs (62) der zweiten rohrartigen Komponente (56) unter Kompression des Dichtelements (50) an der ersten Verbindungsfläche (46) anliegt.

## Claims

1. A connecting flange for connecting two tubular components (12, 56) to each other, preferably in an exhaust system (58) of an internal combustion engine, comprising a flange body (22) annularly surrounding a flange longitudinal axis (F) with a first flange contact region (24) and a second flange contact region (26), which is arranged in the direction of the flange longitudinal axis (F) at a distance from the first flange contact region (24), wherein, at the first flange contact region (24), a first inner circumferential contact surface (28) for contact of the flange body (22) against an outer circumferential surface (18) of one of the components (12, 56) to be connected to each other by means of the connecting flange (20) is provided, and, at the second flange contact region (26), a second inner circumferential contact surface (30) for contact of the flange body (22) against the outer circumferential surface (18) is provided, wherein an insulating recess (40) extending radially outward with respect to the first inner circumferential contact surface (28) or/and the second inner circumferential contact surface (30) and open radially inward is provided in the flange body (22) axially between the first inner circumferential contact surface (28) and the second inner circumferential contact surface (30),
wherein the flange body (22) axially substantially between the first flange contact region (24) and the second flange contact region (26) has a flange connecting region (42) which projects radially outward with respect to the first flange contact region (24) and the second flange contact region (26) and has a connecting region vertex (44) lying axially between the first flange contact region (24) and the second flange contact region (26), wherein the flange body (22) is at the largest radial distance from the flange longitudinal axis (F) in the connecting region vertex (44),
wherein the flange body (22) has a first connecting surface (46) extending from the connecting region vertex (44) to the first flange contact region (24) with, starting from the connecting region vertex (44), a decreasing radial distance from the flange longitudinal axis (F), and a second connecting surface (48) extending from the connecting region vertex (44) to the second flange contact region (26) with, starting from the connecting region vertex (44), a decreasing radial distance from the flange longitudinal axis (F),
wherein a sealing element (50) projecting over the first connecting surface (46) is provided on the flange body (22) axially substantially between the connecting region vertex (44) and the first flange contact region (24),
**characterized in that** a sealing element receiving recess (52) which is open to the first connecting surface (46) is provided in the flange body (22).

2. The connecting flange as claimed in claim 1, **characterized in that** the first flange contact region (24) is provided on a first axial end region (32) of the flange body (22) and the second flange contact region (26) is provided on a second axial end region (34) of the flange body (22), or/and **in that** the first inner circumferential contact surface (28) and the second inner circumferential contact surface (30) are cylinder surfaces, preferably circular cylinder surfaces having the same radius to each other.

3. The connecting flange as claimed in claim 1 or 2, **characterized in that** the flange body (22) is curved convexly with respect to the flange longitudinal axis (F) in the connecting region vertex (44).

4. The connecting flange as claimed in one of claims 1-3, **characterized in that** the first connecting surface (46), starting from the connecting region vertex (44), is substantially conically tapered, or/and **in that** the second connecting surface (48), starting from the connecting region vertex (44), is substantially conically tapered.

5. The connecting flange as claimed in one of claims 1-4, **characterized in that** the sealing element (50) surrounds the flange longitudinal axis (F) substantially annularly, or/and wherein the sealing element (50) is constructed with graphite material.

6. The connecting flange as claimed in one of claims 1-5, **characterized in that** the insulating recess (40) in a region thereof overlapped axially by the sealing element (50) has a smaller length of extent radially outward than in a region thereof not overlapped axially by the sealing element (50).

7. A connecting assembly, preferably for an exhaust system (50) of an internal combustion engine, comprising a first tubular component (12) and at least one connecting flange (20) as claimed in any one of claims 1-6 lying with its first inner circumferential contact surface (28) and its second inner circumferential contact surface (30) on an outer circumferential surface (18) of the first tubular component (12).

8. The connecting assembly as claimed in claim 7, **characterized in that** the at least one connecting flange (20) is fixedly connected in the region of at least one flange contact region by the first flange contact region (24) and second flange contact region (26) to the first tubular component (12) by means of material bonding, preferably welding.

9. The connecting assembly as claimed in claim 7 or 8, **characterized in that** the at least one connecting flange (20) is fixedly connected to the first tubular component (12) only in the region of one flange contact region of the first flange contact region (24) and second flange contact region (26).

10. The connecting assembly as claimed in claim 9, **characterized in that** the at least one connecting flange (20) is fixedly connected in the region of the second flange contact region (26) to the first tubular component (12).

11. An exhaust system for an internal combustion engine, comprising a connecting assembly (10) as claimed in any one of claims 7-10 and at least one second tubular component (56) connected by means of the at least one connecting flange (20) to the first tubular component (12).

12. The exhaust system as claimed in claim 11, **characterized in that** the second tubular component (56) has a counter-connecting region (62) with a counter-connecting surface (64) for connecting interaction with the first connecting surface (46) of the at least one connecting flange (20).

13. The exhaust system as claimed in claim 12, **characterized in that** the counter-connecting surface (64) is formed expanding radially, preferably conically, in the direction of an axial end of the second tubular component (56).

14. The exhaust system as claimed in claim 12 or 13, **characterized in that** the first tubular component (12) and the second tubular component (56) are held together in a connection state by a connecting member (66), preferably connecting clip, annularly surrounding the connecting region (42) of the at least one connecting flange (20) and the counter-connecting region (62) of the second tubular component (56).

15. The exhaust system as claimed in claim 14, **characterized in that** the first tubular component (12) and the second tubular component (56) are held together in the connection state by the connecting member (66) in such a way that the counter-connecting surface (64) of the counter-connecting region (62) of the second tubular component (56) abuts to the first connecting surface (46) by compression of the sealing element (50).

## Revendications

1. Une bride de raccordement pour raccorder deux composants tubulaires (12, 56) l'un à l'autre, de préférence dans un système d'échappement (58) d'un moteur à combustion interne, comprenant un corps de bride (22) entourant de manière annulaire un axe longitudinal de bride (F) avec une première zone de contact de bride (24) et une deuxième zone de contact de bride (26), qui est disposée dans la direction de l'axe longitudinal de bride (F) à une certaine distance de la première zone de contact de bride (24), dans lequel, au niveau de la première zone de contact de bride (24), une première surface de contact circonférentielle intérieure (28) est prévue pour le contact du corps de bride (22) contre une surface circonférentielle extérieure (18) de l'un des composants (12, 56) à relier l'un à l'autre au moyen de la bride de raccordement (20), et, au niveau de la deuxième zone de contact de bride (26), une deuxième surface de contact circonférentielle intérieure (30) est prévue pour le contact du corps de bride (22) contre la surface circonférentielle extérieure (18), dans lequel un évidement isolant (40) s'étendant radialement vers l'extérieur par rapport à la première surface de contact circonférentielle intérieure (28) et/ou la deuxième surface de contact circonférentielle intérieure (30) et s'ouvrant radialement vers l'intérieur est prévue dans le corps de bride (22) axialement entre la première surface de contact circonférentielle intérieure (28) et la deuxième surface de contact circonférentielle intérieure (30),
dans lequel le corps de bride (22) axialement sensiblement entre la première zone de contact de bride (24) et la deuxième zone de contact de bride (26), présente une zone de raccordement de bride (42) qui fait saillie radialement vers l'extérieur par rapport à la première zone de contact de bride (24) et à la deuxième zone de contact de bride (26) et qui présente un sommet de zone de raccordement (44) situé axialement entre la première zone de contact de bride (24) et la deuxième zone de contact de bride (26), dans lequel le corps de bride (22) se trouve à la plus grande distance radiale de l'axe longitudinal de bride (F) dans le sommet de la zone de raccordement (44),
dans lequel le corps de bride (22) présente une première surface de raccordement (46) s'étendant du sommet de la zone de raccordement (44) à la première zone de contact de bride (24) avec, à partir du sommet de la zone de raccordement (44), une distance radiale décroissante par rapport à l'axe longitudinal (F) de la bride, et une deuxième surface de raccordement (48) s'étendant du sommet (44) de la zone de raccordement à la deuxième zone de contact (26) de la bride avec, à partir du sommet (44) de la zone de raccordement, une distance radiale décroissante par rapport à l'axe longitudinal (F) de la bride,
dans lequel un élément d'étanchéité (50) faisant saillie au-dessus de la première surface de raccordement (46) est prévu sur le corps de bride (22) axialement sensiblement entre le sommet de la zone de raccordement (44) et la première zone de contact de bride (24),
**caractérisé en ce qu'**un évidement de réception d'élément d'étanchéité (52) ouvert vers la première surface de raccordement (46) est prévu dans le corps de bride (22).

2. La bride de raccordement selon la revendication 1, **caractérisée en ce que** la première zone de contact de bride (24) est prévue sur une première zone d'extrémité axiale (32) du corps de bride (22) et la deuxième zone de contact de bride (26) est prévue sur une deuxième zone d'extrémité axiale (34) du corps de bride (22), ou/et **en ce que** la première surface de contact circonférentielle intérieure (28) et la deuxième surface de contact circonférentielle intérieure (30) sont des surfaces cylindriques, de préférence des surfaces cylindriques circulaires ayant le même rayon l'une par rapport à l'autre.

3. La bride de raccordement selon la revendication 1 ou 2, **caractérisée en ce que** le corps de bride (22) est courbé de manière convexe par rapport à l'axe longitudinal (F) de la bride au niveau du sommet de la zone de raccordement (44).

4. La bride de raccordement selon l'une des revendications 1 à 3, **caractérisée en ce que** la première surface de raccordement (46), à partir du sommet de la zone de raccordement (44), se rétrécit de manière sensiblement conique, et/ou **en ce que** la deuxième surface de raccordement (48), à partir du sommet de la zone de raccordement (44), se rétrécit de manière sensiblement conique.

5. La bride de raccordement selon l'une des revendications 1 à 4, **caractérisée en ce que** l'élément d'étanchéité (50) entoure l'axe longitudinal (F) de la bride de manière sensiblement annulaire, et/ou **en ce que** l'élément d'étanchéité (50) est réalisé en graphite.

6. La bride de raccordement selon l'une des revendications 1 à 5, **caractérisée en ce que** l'évidement isolant (40) dans une zone de celle-ci recouverte axialement par l'élément d'étanchéité (50) a une longueur d'extension radiale vers l'extérieur plus petite que dans une zone de celle-ci non recouverte axialement par l'élément d'étanchéité (50).

7. Un ensemble de raccordement, de préférence pour un système d'échappement (50) d'un moteur à combustion interne, comprenant un premier composant tubulaire (12) et au moins une bride de raccordement (20) selon l'une quelconque des revendications 1 à 6, dont la première surface de contact circonférentielle intérieure (28) et la deuxième surface de contact circonférentielle intérieure (30) reposent sur une surface circonférentielle extérieure (18) du premier composant tubulaire (12).

8. L'ensemble de raccordement selon la revendication 7, **caractérisé en ce que** ladite au moins une bride de raccordement (20) est reliée de manière fixe dans la zone d'au moins une zone de contact de bride par la première zone de contact de bride (24) et la deuxième zone de contact de bride (26) au premier composant tubulaire (12) au moyen d'une liaison matérielle, de préférence par soudage.

9. L'ensemble de raccordement selon la revendication 7 ou 8, **caractérisé en ce que** ladite au moins une bride de raccordement (20) est reliée de manière fixe au premier composant tubulaire (12) uniquement dans la zone d'une zone de contact de bride de la première zone de contact de bride (24) et de la deuxième zone de contact de bride (26).

10. L'ensemble de raccordement selon la revendication 9, **caractérisé en ce que** ladite au moins une bride de raccordement (20) est reliée de manière fixe dans la zone de la deuxième zone de contact de bride (26) au premier composant tubulaire (12).

11. Un système d'échappement pour un moteur à combustion interne, comprenant un ensemble de raccordement (10) selon l'une quelconque des revendications 7 à 10 et au moins un deuxième composant tubulaire (56) raccordé au premier composant tubulaire (12) au moyen de ladite au moins une bride de raccordement (20).

12. Le système d'échappement selon la revendication 11, **caractérisé en ce que** le deuxième composant tubulaire (56) comporte une zone de contre-raccordement (62) avec une surface de contre-raccordement (64) destinée à s'accoupler avec la première surface de raccordement (46) de ladite au moins une bride de raccordement (20).

13. Le système d'échappement selon la revendication 12, **caractérisé en ce que** la surface de contre-raccordement (64) est formée de manière à s'élargir radialement, de préférence de manière conique, dans la direction d'une extrémité axiale du deuxième composant tubulaire (56).

14. Le système d'échappement selon la revendication 12 ou 13, **caractérisé en ce que** le premier composant tubulaire (12) et le deuxième composant tubulaire (56) sont maintenus ensemble dans un état de raccordement par un élément de raccordement (66), de préférence un clip de raccordement, entourant de manière annulaire la zone de raccordement (42) de ladite au moins une bride de raccordement (20) et la zone de raccordement opposée (62) du deuxième composant tubulaire (56).

15. Le système d'échappement selon la revendication 14, **caractérisé en ce que** le premier composant tubulaire (12) et le deuxième composant tubulaire (56) sont maintenus ensemble dans l'état de raccordement par l'élément de raccordement (66) de telle manière que la surface de contre-raccordement (64) de la zone de contre-raccordement (62) du deuxième composant tubulaire (56) vient en butée contre la première surface de raccordement (46) par compression de l'élément d'étanchéité (50).
